# EUROPÄISCHE PATENTSCHRIFT

(11) **EP 1 707 468 B1**
(45) Veröffentlichungstag und Bekanntmachung des Hinweises auf die Patenterteilung: **11.05.2011**
(21) Anmeldenummer: 06112128.1
(22) Anmeldetag: 31.03.2006
(51) Int. Cl.: B62B 13/16

(54) **Klappschlitten**
Collapsable sledge
Luge pliante

(30) Priorität: 01.04.2005 DE 102005015327; 01.07.2005 DE 102005031196; 22.07.2005 DE 102005034968
(43) Veröffentlichungstag der Anmeldung: 04.10.2006
(73) Patentinhaber: Heringer, Bernhard, 53859 Niederkassel (DE)
(72) Erfinder: Valtingoier, Ingo P., 80335 München (DE)
(74) Vertreter: Lenzing Gerber Stute

(56) Entgegenhaltungen:
- CA-A1- 1 062 750
- DE-B3- 10 331 991
- DE-U1- 8 517 785
- DE-U1-202004 006 564
- GB-A- 1 004 135
- GB-A- 191 210 953

## Beschreibung

Die Erfindung betrifft einen Klappschlitten nach dem Oberbegriff des Anspruchs 1.

Ein Klappschlitten dieser Art ist aus der DE 85 17 785 U1 bekannt. Der darin offenbarte Klappschlitten hat zwei jeweils eine Kufe aufweisende Seitenteile, die gelenkig mit einem Querteil verbunden sind, wobei die Seitenteile um eine zur Fahrtrichtung des Schlittens im Wesentlichen parallele Achse verschwenkbar sind. Darüber hinaus weist der Klappschlitten als Sitzfläche ein knickbares Gewebe oder eine faltbare Matte auf, die die oberen Längsholme der Seitenteile umfasst und deren aneinander grenzenden Längskanten lösbar miteinander verbunden sind. Der Querträger ist zweigeteilt und um eine durch eine Schraube definierte Achse knickbar. Der Querträger und die Seitenteile können in einer Gebrauchsanordnung über Diagonalstreben ausgesteift werden, die jeweils in einem unteren Bereich der Seitenteile angelenkt sind und an der Querstrebe zu beiden Seiten der Schraube mit einer Steckklammer befestigt werden können.

Ein anderer Klappschlitten ist aus der DE 103 31 991 B3 bekannt. Er weist zwei seitliche, zueinander geneigte Schlittenrahmen auf, die über Querstreben und einen Sitz miteinander gekoppelt sind. Die Schlittenrahmen weisen jeweils eine Kufe und eine fest mit dem Sitz verbundene Sitzleiste auf. Die Sitzleisten und die Kufen der jeweiligen Schlittenrahmen sind durch jeweils einen vorderen und einen hinteren vertikalen Holm, die zueinander geneigt angeordnet sind, gegeneinander abgestützt. Die Querstreben sind zwischen den gegenüberliegenden vorderen und hinteren Holmen angeordnet. Sie sind mittig mit einem Scharnier ausgestattet und an ihren Enden an den Holmen verschwenkbar gelagert. Die Scharnierachsen stehen geneigt zur Fahrtrichtung, wobei die Ebenen der Dreh- und Scharnierachsen der vorderen und der hinteren Querstrebe genau so wie die vorderen und die hinteren Holme geneigt zueinander orientiert sind. Durch die geneigten Drehachsen wird verhindert, dass die beiden Schlittenrahmen relativ zueinander in Längsrichtung des Klappschlittens verschoben werden können, so dass eine mögliche Parallelverschiebung der Schlittenrahmen und der Querstreben unterbunden wird.

Der Erfindung liegt die Aufgabe zugrunde, einen Klappschlitten der gattungsgemäßen Art zu schaffen, der in einfacher und bequemer Weise klappbar ist und eine hohe Stabilität hat.

Diese Aufgabe wird durch einen Klappschlitten mit den Merkmalen des Anspruchs 1 gelöst.

Durch die erfindungsgemäße Ausbildung kann der Klappschlitten durch einfaches Lösen des Sitzteiles zusammengeklappt, also von der Gebrauchsanordnung in die Transportanordnung gebracht werden. Beim Aufklappen des Schlittens von der Transportanordnung in die Gebrauchsanordnung können die Seitenteile soweit geschwenkt werden, bis die Anschläge der Seitenteile diese Bewegung stoppen, wobei das Aufklappen ohne großen Kraftaufwand erfolgen kann. Wenn das Sitzteil anschließend befestigt wird, sind die Freiheitsgrade der durch das Sitzteil, den Seitenteilen und dem Querteil geschaffenen Schlittenanordnung gesperrt. Damit sind beide Freiheitsgrade der Seitenteile gegenüber dem Querteil gesperrt, so dass ohne zusätzliche Befestigungsmittel eine hohe Stabilität gegeben ist. In Gebrauchsanordnung bilden Seitenteile, Querteil und Sitzteil vorzugsweise eine Art räumliche, in Projektion in Fahrtrichtung im Wesentlichen viereckige Rahmenstruktur.

In einer vorteilhaften Weiterbildung des erfindungsgemäßen Klappschlittens sind zwei zueinander parallele Querteile vorgesehen, die insbesondere etwa im Abstand einer Sitzlänge zueinander versetzt sind. Dadurch wird die Stabilität weiter verbessert. Die beiden Querteile mit ihren Anschlägen und das Sitzteil legen jeweils flächige Rahmenteile innerhalb der räumlichen Rahmenstruktur fest und verhindern eine Parallelverschiebung einzelner Rahmenteile zueinander.

Die Stabilität des Schlittens kann auch erhöht werden, wenn jedes Seitenteil mit einem oberen, etwa parallel zur Kufe verlaufenden, das Sitzteil tragenden Holm versehen ist

In einer einfachen Ausführungsform sind die Seitenteile an den Enden des bzw. der Querteile angelenkt. Alternativ können die Seitenteile beispielsweise quer zu der von ihnen aufgespannten Ebene verlaufende, mit den Querteilen zusammenwirkende Stege aufweisen, deren Enden an den Querteilen, mit Abstand zu den jeweiligen Enden der Querteile angelenkt sind. Eine solche Ausgestaltung macht beispielsweise dann Sinn, wenn die Stege und die Querteilenden derart profiliert sind, dass sie in Gebrauchsanordnung ineinander greifen, so dass die Verbindung zwischen Seitenteil und Querteil insbesondere in Längsrichtung des Schlittens stabilisiert ist.

Darüber hinaus verbesserte Stabilitätseigenschaften erreicht man, wenn zwischen dem oberen Holm und der Kufe mindestens ein insbesondere senkrechtes Verbindungsstück vorgesehen ist und vorzugsweise zwei Verbindungsstücke vorgesehen sind, wobei das oder die Querteile an den Verbindungsstücken angelenkt sind. Eine im Wesentlichen senkrechte Anordnung der Verbindungsstücke erlaubt ein hohes Gewicht auf der Sitzfläche. Je nach Neigung der Verbindungsstücke zwischen den Holmen und den Kufen kann aber auch eine Stöße abfedernde Wirkung erzielt werden.

Bei einer weiteren vorteilhaften Ausführung der Erfindung ist das Sitzteil unter einer Zugvorspannung an den Seitenteilen befestigbar. Die Zugvorspannung gewährleistet eine spielfreie Festlegung der Schlittenteile. Diese Festlegung wird insbesondere über eine elastische Ausführung des Sitzteiles und/oder über eine elastische Ausführung der Verbindungsstücke und/oder über eine elastische Ausführung der Anschläge erreicht.

Das Festlegen der Teile des Klappschlittens in seiner Transportanordnung wird unter anderem damit ermöglicht, dass die oberen Kufen einen zweiten Anschlag bilden, so dass eine Drehbegrenzung des Seitenteils in der Transportanordnung gegeben ist, wenn die Seitenteile in der Transportanordnung auf einer Ebene nebeneinander liegen. Durch die Drehbegrenzung der Verbindungsstücke wird eine definierte Transportlage geschaffen. Zusätzlich können die Verbindungsstücke mit den Querteilen durch Klemmen, Klebebänder, Kabelbinder, Transportschnüre oder dergleichen verbunden werden, um die Transportanordnung zu sichern. So kann nicht nur der Schlitten zum Transport erheblich verkleinert werden, es sind auch mehrere Schlitten sehr gut aufeinander stapelbar.

Nach einer weiteren vorteilhaften Ausführung der Erfindung ist jedes Querteil in sich symmetrisch durch ein Scharniergelenk zusammenklappbar so ausgebildet, dass die Seitenteile aufeinander gelegt werden können. Durch diese Maßnahme ist der zusammengeklappte Schlitten sehr klein und kompakt und findet auch in einem sehr kleinen Kofferraum eines Pkw Platz. Eine bevorzugte Lösung hierzu besteht darin, dass jedes Querteil zwei Trägerhälften und mindestens ein die Trägerhälften verbindendes Scharnier aufweist, wobei die Trägerhälften in der Gebrauchesanordnung im Wesentlichen fluchten und in der Transportanordnung im Wesentlichen parallel zueinander angeordnet sind.

Bevorzugt sind an den jeweils aneinander angrenzenden Stirnseiten der Trägerhälften abgewinkelte Stege ausgebildet, deren freie Enden über die Scharniere miteinander verbunden sind. In ausgeklapptem Zustand wirken die aneinander anliegenden Flächen der abgewinkelten Stege einen stabilen Anschlag, durch den die Trägerhälften in Gebrauchsanordnung in ihrer Position gehalten werden.

Des Weiteren ist es günstig, wenn das Scharniergelenk arretierbar ausgebildet ist. Eine Arretierung ist in erster Linie für die Gebrauchsanordnung vorgesehen. Ebenfalls kann eine Arretierung vorgesehen sein, um den Klappschlitten in seiner Transportanordnung zu halten. Eine Arretierung der Scharniere kann dadurch erfolgen, dass Mittel vorgesehen sind, die das Umsetzen des Drehgelenks des Scharniers in eine andere Position ermöglichen, so dass die aneinander anliegenden Flächen der Trägerhälften eine Bewegung der Trägerhälften in eine ungewollte Richtung formschlüssig sperren.

Zur weiteren Reduktion der Abmessungen des Klappschlittens in seiner Transportanordnung sind die Seitenteile bevorzugt jeweils mehrteilig mit mindestens einem Oberteil und einem Unterteil ausgebildet. Ober- und Unterteile können über eine Gelenkverbindung so miteinander verbunden sein, dass sie gegeneinander schwenkbar sind und hierdurch ineinander gelegt werden können. Eine besonders einfache Bauweise eines derart klappbaren Seitenteils ergibt sich, wenn die Gelenkverbindung gleichzeitig zur schwenkbaren Verbindung der Seitenteile mit dem bzw. den Querteilen dient. Zum einfachen Aufklappen des Schlittens in die Gebrauchsanordnung sind weitere Anschläge vorgesehen, die die Schwenkbewegung des Oberteils und des Unterteils bei Erreichen der Gebrauchsanordnung begrenzen.

Im Folgenden wird die Erfindung anhand von Figuren, in denen verschiedene bevorzugte Ausführungsbeispiele der Erfindung dargestellt sind, näher erläutert.

Es zeigen:
- Fig. 1: eine perspektivische Darstellung einer ersten Ausführungsform eines erfindungsgemäßen Klappschlittens in ausgeklapptem Zustand bzw. in Gebrauchsanordnung,
- Fig. 2: eine perspektivische Darstellung des in Fig. 1 gezeigten Klapp- schlittens, jedoch in zusammengeklapptem Zustand bzw. in Transport- anordnung,
- Fig. 3: eine perspektivische Darstellung einer zweiten Ausführungsform eines erfindungsgemäßen Klappschlittens im ausgeklappten Zustand,
- Fig. 4: eine perspektivische Darstellung des in Fig. 3 gezeigten Klappschlittens in teilweise zusammengeklapptem Zustand,
- Fig. 5: eine perspektivische Darstellung des in Fig. 3 gezeigten Klappschlittens in komplett zusammengeklapptem Zustand,
- Fig. 6: eine perspektivische Darstellung einer dritten Ausführungsform eines erfindungsgemäßen Klappschlittens in ausgeklapptem Zustand bzw. in Gebrauchsanordnung,
- Fig. 7: eine perspektivische Darstellung des in Fig. 6 gezeigten Klappschlittens in teilweise zusammengeklapptem Zustand,
- Fig. 8: eine perspektivische Darstellung des in Fig. 1 gezeigten Klappschlittens in komplett zusammengeklapptem Zustand bzw. in Transportanordnung.

In den Figuren sind funktionsgleiche Teile verschiedener Ausführungsformen mit denselben Bezugszeichen versehen.

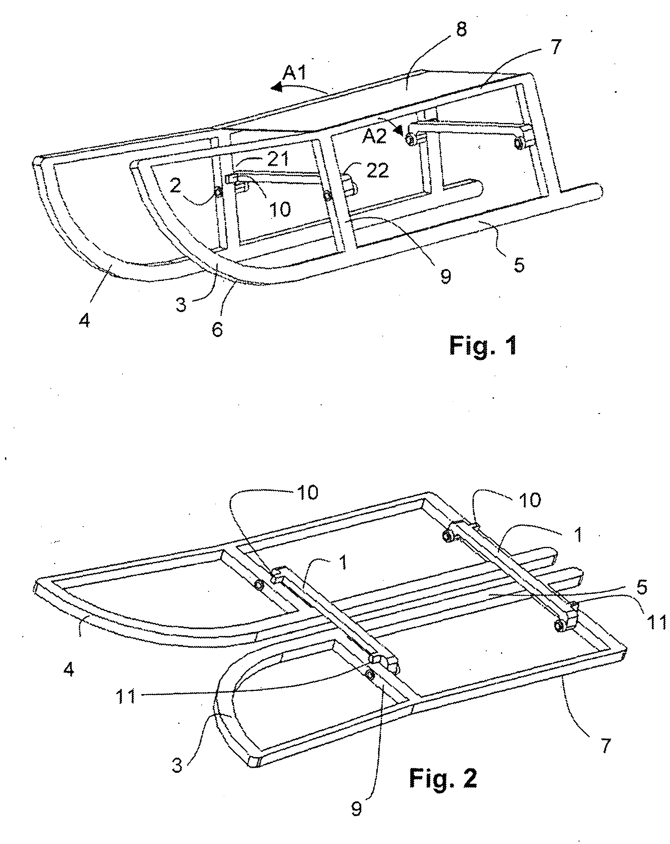

Fig. 1 zeigt eine erste Ausführungsform eines erfindungsgemäßen Klappschlittens im ausgeklappten Zustand bzw. in Gebrauchsanordnung. Diese Ausführungsform stellt eine einfache Grundausführung dar.

Der Klappschlitten umfasst zwei Seitenteile 3, 4. Diese bestehen jeweils aus einer Kufe 5 bzw. aus einem in Fahrtrichtung vorne nach oben gebogenes Unterteil, welches eine Lauffläche 6 trägt, sowie aus einem oberen Holm 7, der als Sitzleiste ausgebildet ist und zur Aufnahme einer Sitzfläche vorgesehen ist. Der Holm 7 dient außerdem zur Stabilisierung des Seitenteils 3 bzw. 4.

An der Sitzleiste ist ein Sitzteil 8 lösbar befestigt, das sich über einen Teil der oberen Holmlänge erstreckt (zum Beispiel 60%). Das Sitzteil 8 besteht vorzugsweise aus einem dünnen, biegbaren und elastischen Material. An den Rändern ist es verstärkt und/oder durch Seitenleisten stabilisiert. Es kann insbesondere aus Holz, Kunststoff und/oder Metall, aber auch aus einem reißfesten Textil, bestehen.

Die Kufe 5 und der obere Holm 7 sind über zwei senkrechte Verbindungsstücke 9 miteinander verbunden, die in Fahrtrichtung in etwa im Abstand einer Sitzlänge voneinander entfernt sind und insbesondere unterhalb des vorderen bzw. des hinteren Sitzendes liegen. Beide Verbindungsstücke 9 liegen vorzugsweise parallel zueinander.

Der Holm 7 ist mit der Kufe 5 oberhalb der vom Sitzteil aufgespannten Ebene verbunden.

Die Seitenteile 3, 4 sind mit den Enden 21, 22 zweier Querteile 1 gelenkig verbunden. Wenn das Sitzteil 8 gelöst ist, sind die Seitenteile 3, 4 oben nach außen um jeweils eine Gelenkachse 2 aus der Gebrauchsanordnung heraus schwenkbar, was durch die Pfeile A1 und A2 angedeutet ist. Jede Gelenkachse 2 verläuft etwa in Fahrtrichtung des Schlittens. Die Querteile 1 sind mit den Verbindungsstücken 9 etwa in ihrer Mitte bzw. etwa mittig zwischen Holm 7 und Kufe 5, verbunden.

Um zu verhindern, dass die durch die Seitenteile 3, 4 und die Querteile gebildete räumliche Rahmenstruktur zusammenfällt, ist im Bereich jedes Endes 21, 22 der Querteile 1 ein Anschlag 10, 11 vorgesehen, der eine Schwenkbewegung des entsprechenden Seitenteiles 3, 4 in der Gebrauchsanordnung stoppt. Jeder Anschlag 10, 11 kann durch einen an dem Querteil 1 angeformten Steg oder dergleichen gebildet werden.

Vorzugsweise können die Seitenteile 3, 4 bis zu einem Winkel von etwa 10° aus der Lotrechten ausgeklappt werden. Dieser Winkel bietet einen guten Kompromiss aus Fahreigenschaften und Kraftverlauf innerhalb der räumlichen Rahmenstruktur. Erfindungsgemäß weisen die Seitenteile 3, 4 für das Sitzteil 8 eine lösbare Verbindung auf. Durch Lösen des in Fig. 1 in der befestigten Sitzstellung gezeigten Sitzteiles 8 kann der Schlitten von der Gebrauchsanordnung in die Transportanordnung, die in Fig. 2 veranschaulicht ist, zusammengeklappt werden. In der Transportanordnung stoßen die Kufen 5 an den Querteilen 1 an, so dass die Seitenteile 3, 4 vorzugsweise nicht über eine zu den Querteilen 1 parallele Stellung hinaus gedreht werden können, wie Fig. 2 zeigt. Die Drehung der Seitenteile 3, 4 nach innen wird durch eine Unterseite der Querverbindung bzw. der Querteile 1 begrenzt.

Zum Aufklappen in die Gebrauchsanordnung werden die Seitenteile 3, 4 aus der geklappten Position (Fig. 2) nach außen gedreht, bis sie mit den Verbindungsstücken 9 an den Anschlägen 10, 11 der Querteile 1 anliegen. Zuerst wird eine Seite des Sitzteils an dem oberen Holm 7 eines der Seitenteile 3, 4 und dann die gegenüberliegende Seite des Sitzteiles 8 an dem oberen Holm 7 des zweiten Seitenteils 4 befestigt. Somit sind beide Verbindungen zwischen dem Sitzteil 8 und den oberen Holmen 7 der Seitenteile 3, 4 lösbar. Insbesondere wenn das Sitzteil flexibel ausgestaltet ist, kann es ausreichen, wenn nur eine der Verbindungen zu den Holmen 7 lösbar ist.

Die lösbare Verbindung des Sitzteiles 8 mit einem der Holme 7 kann eine kraft- und/oder formschlüssige Verbindung sein. Beispielsweise kann das Sitzteil über Spannhaken, Rastelemente oder dergleichen mit den Seitenteilen 3, 4 verbunden werden. Auch können entlang der Oberseite der Holme 7 eingelassene, hinterschnittene Nuten verlaufen, in die Keder, die an den Seiten einer insbesondere aus textilem Material bestehenden Sitzfläche ausgebildet sein können, einführbar sind. Vorzugsweise erfolgt die Verbindung werkzeuglos.

Um eine ausreichende Stabilität und eine spielfreie Arretierung des Gesamtsystems zu gewährleisten, ist vorzugsweise eine Zugvorspannung des Sitzteiles 8 vorgesehen. Die Vorspannung wirkt auf die Holme 7, so dass diese nur entgegen der Vorspannung auseinander bewegt werden können.

Die Zugvorspannung kann über eine elastische Ausführung des Sitzteiles 8 erreicht werden.

Auch können die Verbindungsstücke 9 der Seitenteile 3, 4 zwischen den Gelenkachsen 2 und den oberen Holmen 7 elastisch ausgeführt sein, um die gewünschte Vorspannung zu erzeugen. Die Verbindungsstücke 9 werden dann zur Befestigung des Sitzteiles 8 nach innen vorgespannt.

In einer weiteren Alternative kann die Zugvorspannung über eine elastische Ausführung der Anschläge 10, 11 an den Querteilen 1 realisiert werden. Die elastischen Anschläge 10, 11 lassen eine definierte Drehung der Seitenteile 3, 4 nach außen zu. Sie ermöglichen somit, dass das Sitzteil 8 im spannungsfreien Zustand an mindestens einem Holm 7 eines der Seitenteile 3, 4 befestigt werden kann. Eine Wegnahme der Vorspannung auf die Anschläge 10, 11 hat nämlich eine Zugvorspannung in dem Sitzteil zur Folge. Das System ist somit stabil fixiert.

Um den Klappschlitten in die in Fig. 2 gezeigte Transportanordnung zu bringen, wird mindestens eine der Verbindungen zwischen dem Sitzteil 8 und den oberen Holmen 7 der Seitenteile 3, 4 gelöst. Danach kann der Klappschlitten zusammengeklappt werden. Die zusammengeklappte Stellung oder Transportanordnung wird erreicht, wenn die Kufen 5 der Seitenteile 3, 4 auf die Querteile 1 nach innen gedreht werden, bis sie an den Querteilen 1 anliegen. Die Seitenteile 3, 4 liegen in der Transportanordnung vorzugsweise in einer Ebene nebeneinander.

Eine bevorzugte Lösung, bei der die Abmessungen des Klappschlittens in der zusammengeklappten Stellung weiter reduziert werden können, ist gegeben, wenn jedes Querteil 1 in sich zusammenklappbar so ausgebildet ist, dass die Seitenteile 3, 4 aufeinander gelegt werden können.

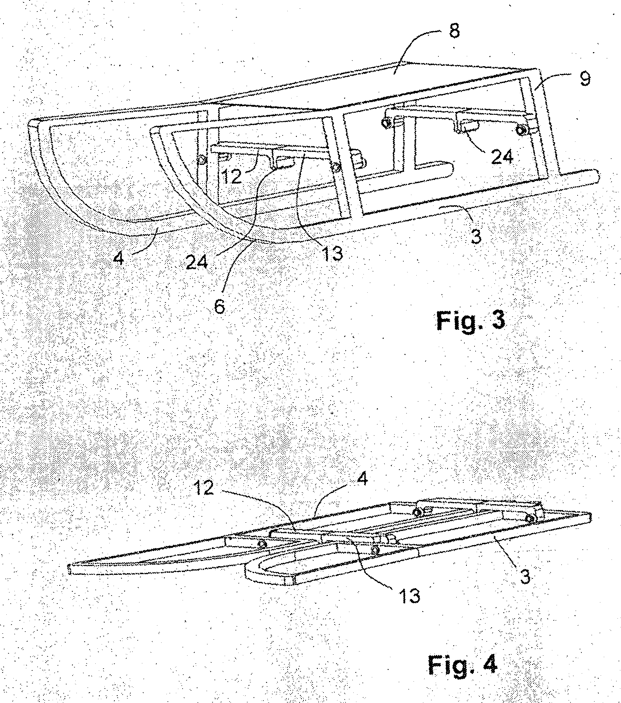

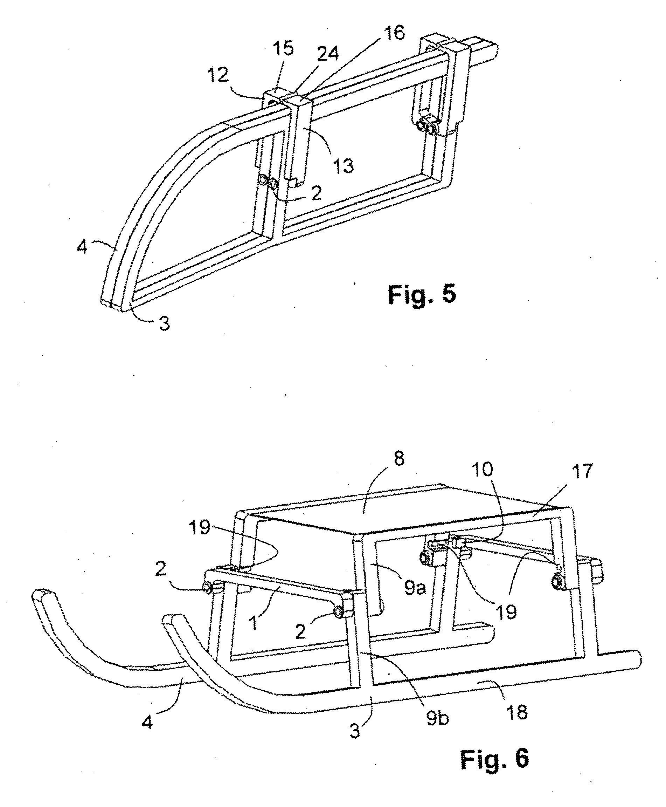

In Fig. 3 ist eine solche Ausführung gezeigt. Über die in Fig. 4 gezeigte Zwischenstellung wird der Klappschlitten, wie Fig. 5 zeigt, praktisch zusammengefaltet. Eine Möglichkeit, die gewünschte kompakte Transportanordnung zu erreichen, wird durch eine zweiteilige, symmetrische Ausführung der Querverbindung und die drehbare Verbindung der beiden Querträger bzw. Trägerhälften 12, 13 über ein Drehgelenk bzw. das Scharniergelenk 24 geschaffen.

Jedes Querteil 1 besteht aus zwei Trägerhälften 12, 13, an deren Enden jeweils in Gebrauchsanordnung nach unten gerichtete kurze Schenkel vorgesehen sind. Ein Scharniergelenk 24 verbindet die freien Enden der beiden mittleren Schenkel der Trägerhälften 12, 13 miteinander. In Gebrauchsanordnung (Fig. 3) fluchten die Trägerhälften 12, 13, während sie in Transportanordnung (Fig. 5) im Wesentlichen parallel zueinander liegen. Die Drehung der Trägerhälften 12, 13 aus ihrer Gebrauchsanordnung nach oben wird durch den Kontakt der aneinander anliegenden Stirnflächen 15, 16 der Schenkel der Trägerhälften 12, 13 formschlüssig verhindert. Eine Drehung nach unten wird in Gebrauchsanordnung durch die Druckspannung in der Querverbindung gehemmt.

In Transportstellung sind die Seitenteile 3, 4 zwischen den Trägerhälften 12, 13 positioniert und liegen innerhalb des durch die Trägerhälften 12, 13 und die Schenkel definierten Bereichs liegen.

Eine alternative Möglichkeit der Arretierung des Scharniergelenks 24 besteht in einer reibschlüssige Sperrung des Scharniergelenks 24 durch eine Vorspannung in axialer Richtung. Beispielsweise kann diese durch einen Spannhebel in Verbindung mit einer oder mehreren Federn oder dergleichen bewirkt werden.

Eine weitere Möglichkeit der Arretierung besteht in einer formschlüssigen Sperrung des Scharniergelenks 24. Beispielsweise kann dies mit einem Sicherungsbolzen, einer verzahnten Scheibe oder ähnlichem erfolgen.

Eine dritte Variante des Klappschlittens ist in den Figuren 6 bis 8 gezeigt. Bei dieser Ausführungsform sind die Seitenteile 3, 4 in ein Oberteil 17 und ein Unterteil 18 unterteilt. Beide Teile 17, 18 sind über eine Gelenkverbindung miteinander so verbunden, dass das Oberteil 17 und das Unterteil 18 in einer Ebene quer zur Längsrichtung des Schlittens gegeneinander verschwenkbar sind. Mit dieser Konstruktion kann der Platzbedarf für die Lagerung und den Transport des Klappschlittens weiter minimiert werden.

Die Gelenkverbindung findet an den Verbindungsstücken 9 statt, die in zwei Teile unterteilt sind, und zwar einem dem Sitzteil 8 bzw. dem Oberteil 17 zugeordneten Teil 9a und einem der Kufe 5 bzw. dem Unterteil 18 zugeordneten Teil 9b.

Für die Arretierung der Ober- und Unterteile 17, 18 in der Gebrauchsanordnung ist vorzugsweise ein Anschlag 19 vorgesehen, der auf dem Unterteil 18 sitzt und eine Drehung des Oberteils 17 nach innen über die Mittelachse der Seitenteile 3, 4 verhindert. Beispielsweise ist der weitere Anschlag 19 ein Zapfen, der in Gebrauchsanordnung in eine Aussparung am Teil 9a eintaucht. Eine Rastverbindung an dieser Stelle, die zur Vereinfachung der Montage des Sitzteiles 8 dient, ist auch möglich. Eine Begrenzung in die andere Richtung (nach außen) ist aufgrund der Fixierung des Gesamtsystems über das Sitzteil 8 insofern nicht erforderlich. Die Lage des unteren Teils 9b wird in Gebrauchsanordnung durch den Anschlag 19 sowie durch den darüber liegenden Anschlag 10 der Querverbindung 1 fixiert.

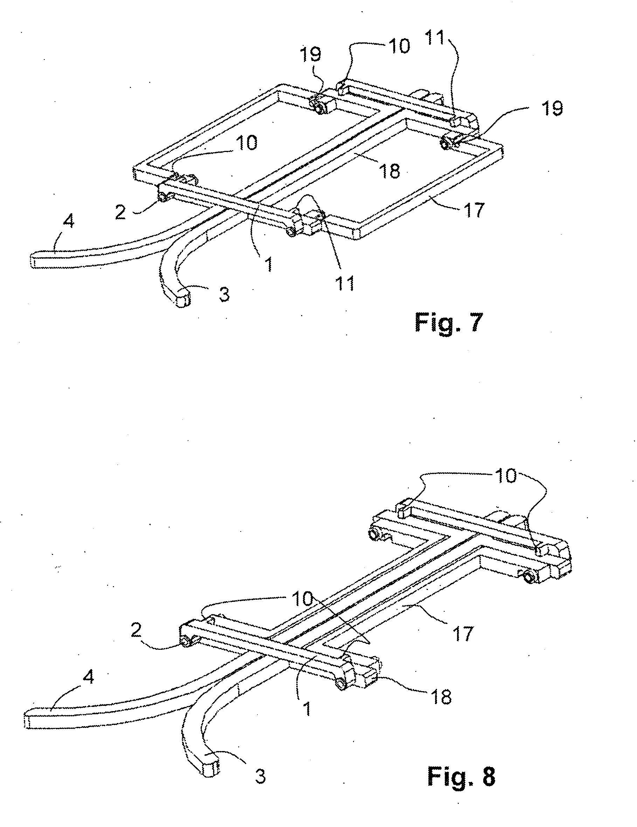

Zum Aufklappen des Schlittens werden analog zu der in den Figuren 1 und 2 gezeigten Ausführungsform die geklappten Teile 3, 4 bis zum Anschlag 10, 11 nach außen gedreht, dann werden die Oberteile 17 der Seitenteile 3, 4 bis zu den weiteren Anschlägen 19 an den Unterteilen aufgeklappt. Die Befestigung des Sitzteiles 8 erfolgt analog zur ersten Ausführungsform. Der teilweise zusammengeklappte Schlitten ist in Figur 7 dargestellt (Zwischenstellung), der vollständig zusammengeklappte Schlitten in Figur 8.

Die Erfindung ist nicht auf die dargestellten Ausführungsbeispiele beschränkt, sondern nur durch die Patentansprüche. Ohne weiteres kann zum Beispiel die zweite Ausführungsform (Fig. 3 - 5) mit der dritten Ausführungsform (Fig. 6 - 8) kombiniert werden. Damit können sowohl das Querteil 1 als auch die Seitenteile 3, 4 selbst zusammengeklappt werden.

### Liste der Bezugszeichen

- 1: Querteile
- 2: Gelenkachse
- 3: erstes Seitenteil
- 4: zweites Seitenteil
- 5: Kufe
- 6: Lauffläche
- 7: Holm
- 8: Sitzteil
- 9: Verbindungsstücke
- 10: erster Anschlag
- 11: zweiter Anschlag
- 12: erste Trägerhälfte
- 13: zweite Trägerhälfte
- 15: erste Stirnfläche
- 16: zweite Stirnfläche
- 17: Oberteil
- 18: Unterteil
- 19: weiterer Anschlag
- 20: erstes Ende
- 21: zweites Ende
- 24: Scharniergelenk

## Patentansprüche

1. Klappschlitten, der in eine Gebrauchsanordnung und eine Transportanordnung bringbar ist, mit zwei jeweils mindestens eine Kufe aufweisenden, klappbaren Seitenteilen (3, 4), die über mindestens ein mit den Seitenteilen (3, 4) mit Gelenkmitteln verbundenes Querteil (1) verbunden und mindestens teilweise um eine zur Fahrtrichtung des Schlittens im Wesentlichen parallele Achse so verschwenkbar sind, dass ein zur Fahrtrichtung des Schlittens im Wesentlichen paralleler Verlauf der Kufen in Gebrauchsanordnung gewährleistet ist, sowie mit einem eine Sitzfläche aufweisenden Sitzteil (8), das mit beiden Seitenteilen (3, 4) verbunden ist, **gekennzeichnet durch**
- mindestens einen Anschlag (10, 11) für jedes Seitenteil (3, 4), der eine Schwenkbewegung des entsprechenden Seitenteiles (3, 4) in der Gebrauchsanordnung stoppt, und
- eine lösbare Verbindung zwischen mindestens einem der Seitenteile (3, 4) und dem Sitzteil (8), wobei der Schlitten **durch** die Verbindung des Sitzteils (8) mit beiden Seitenteilen (3, 4) in seiner Gebrauchsanordnung stabilisiert ist und nach Lösen des Sitzteils (8) von der Gebrauchsanordnung in die Transportanordnung zusammenklappbar ist.

2. Klappschlitten nach Anspruch 1, **gekennzeichnet durch** zwei zueinander parallel verlaufende Querteile (1), die insbesondere etwa um den Abstand einer Sitzlänge in Fahrtrichtung des Schlittens zueinander beabstandet sind.

3. Klappschlitten nach Anspruch 1 oder 2, **dadurch gekennzeichnet, dass** die Seitenteile an den Enden des bzw. der Querteile (1) angelenkt sind.

4. Klappschlitten nach einem der Ansprüche 1 bis 3, **dadurch gekennzeichnet, dass** jedes Seitenteil (3, 4) als Rahmen mit einem etwa parallel zur Kufe (5) verlaufenden, oberen Holm (7) ausgebildet ist, der das Sitzteil (8) trägt.

5. Klappschlitten nach Anspruch 4, **gekennzeichnet durch** mindestens ein insbesondere senkrechtes Verbindungsstück (9) zwischen dem oberen Holm (7) und der Kufe (5), wobei das bzw. die Querteile (1) an den Verbindungsstücken (9) angelenkt sind.

6. Klappschlitten nach Anspruch 5, **gekennzeichnet durch** zwei Verbindungsstücke (9).

7. Klappschlitten nach einem der vorhergehenden Ansprüche, **dadurch gekennzeichnet, dass** das Sitzteil (8) unter einer Zugvorspannung an den Seitenteilen (3, 4) befestigbar ist.

8. Klappschlitten nach Anspruch 7, **dadurch gekennzeichnet, dass** die Zugvorspannung über eine elastische Ausführung des Sitzteiles (8) und/oder über eine elastische Ausführung der Verbindungsstücke (9) und/oder über eine elastische Ausführung der Anschläge (10, 11) erfolgt.

9. Klappschlitten nach einem der Ansprüche 4 bis 8, **dadurch gekennzeichnet, dass** die Kufe (5) einen weiteren Anschlag bildet, so dass eine Beschränkung der Schwenkbewegung der Seitenteile (3, 4) in die Transportanordnung gegeben ist, wobei die Seitenteile (3, 4) in der Transportanordnung in einer Ebene nebeneinander liegen.

10. Klappschlitten nach einem der vorhergehenden Ansprüche, **dadurch gekennzeichnet, dass** jedes Querteil (1) durch ein Scharniergelenk (24) zusammenklappbar so ausgebildet ist, dass die Seitenteile (3, 4) aufeinander gelegt werden können.

11. Klappschlitten nach Anspruch 10, **dadurch gekennzeichnet, dass** jedes Querteil (1) mindestens zwei U-förmigen Trägerhälften (12, 13) und mindestens ein mittiges, die aneinander angrenzenden freien Schenkel der Trägerhälften (12, 13) verbindendes Scharniergelenk (24) aufweist, wobei die Trägerhälften (12, 13) in der Gebrauchsanordnung im Wesentlichen fluchten und in der Transportanordnung im Wesentlichen parallel zueinander angeordnet sind.

12. Klappschlitten nach Anspruch 10 oder 11, **dadurch gekennzeichnet, dass** das Scharniergelenk (24) arretierbar ist.

13. Klappschlitten nach Anspruch 12, **dadurch gekennzeichnet, dass** Mittel für eine reibschlüssige Sperrung des Scharniergelenks (24) durch eine Vorspannung in axialer Richtung vorgesehen sind.

14. Klappschlitten nach Anspruch 12, **dadurch gekennzeichnet, dass** Mittel zur Arretierung des Scharniergelenks (24) durch eine formschlüssige Sperrung vorgesehen sind.

15. Klappschlitten nach Anspruch 12, **dadurch gekennzeichnet, dass** Mittel zur Arretierung durch eine Versetzung des Scharniergelenks vorgesehen sind, wobei eine ungewünschte Drehung der Trägerhälften (12, 13) durch einen Kontakt der aneinander anliegenden Flächen (15, 16) der Trägerhälften (12, 13) formschlüssig verhindert wird.

16. Klappschlitten nach einem der vorhergehenden Ansprüche, **dadurch gekennzeichnet, dass** die Seitenteile (3, 4) in ein Oberteil (17) und ein Unterteil (18) unterteilt sind, welche über mindestens eine Gelenkverbindung miteinander verbunden sind.

17. Klappschlitten nach Anspruch 16, **dadurch gekennzeichnet, dass** das Oberteil (17) und das Unterteil (18) über die Gelenkachse (2) miteinander verschwenkbar so verbunden sind, dass das Oberteil (17) und das Unterteil (18) um eine Gelenkachse parallel zur Fahrtrichtung gegeneinander schwenkbar sind, wobei die Gelenkachse der Gelenkverbindung zudem als Drehachse für die Schwenkverbindung von Querteil (1) und Seitenteil (3, 4) dient.

18. Klappschlitten nach Anspruch 16 oder 17 wenn abhängig von Anspruch 5, **dadurch gekennzeichnet, dass** an jedem Verbindungsstück (9) eine Gelenkverbindung für das Oberteil (17) und das Unterteiles (18) vorhanden ist, wobei jedes Verbindungsstück (9) in einen dem Oberteil (17) zugeordneten Teil (9a) und einen dem Unterteil (18) zugeordneten Teil (9b) unterteilt ist.

19. Klappschlitten nach einem der Ansprüche 16 bis 18, **dadurch gekennzeichnet, dass** das Oberteil (17) und das Unterteil (18) in der Gebrauchsanordnung durch einen weiteren Anschlag (19) drehbegrenzt sind.

20. Klappschlitten nach einem der vorhergehenden Ansprüche, **dadurch gekennzeichnet, dass** das Sitzteil (8) aus einem dünnen, elastischen Material besteht.

21. Klappschlitten nach einem der vorhergehenden Ansprüche, **dadurch gekennzeichnet, dass** die Seitenteile (3, 4) bis zu einem Winkel von etwa 10° aus der Lotrechten in Gebrauchsanordnung ausgeklappt werden können.

## Claims

1. Folding sledge, which can be brought into an in-use arrangement and a transport arrangement, with two foldable side parts (3, 4), each having at least one runner, which are connected by at least one cross-piece (1) connected to the side parts (3, 4) via hinge means and can be pivoted at least partially about an axis substantially parallel to the direction of travel of the sledge such that a configuration of the runners substantially parallel to the direction of travel of the sledge in the in-use arrangement is guaranteed, and with a seat part (8) having a seat surface, which seat part (8) is connected to both side parts (3, 4), **characterised by**
- at least one stop (10, 11) for each side part (3, 4), which stop (10, 11) stops a swivel movement of the corresponding side part (3, 4) in the in-use arrangement, and
- a detachable connection between at least one of the side parts (3, 4) and the seat part (8), wherein the sledge is stabilised by the connection of the seat part (8) to both side parts (3, 4) in its in-use arrangement and, after detaching the seat part (8), can be folded up from the in-use arrangement into the transport arrangement.

2. Folding sledge according to Claim 1, **characterised by** two cross-pieces (1) running parallel to each other, which are in particular spaced apart from each other approximately by the distance of a seat length in the direction of travel of the sledge.

3. Folding sledge according to Claim 1 or 2, **characterised in that** the side parts are hinged at the ends of the cross-piece(s) (1).

4. Folding sledge according to any one of Claims 1 to 3, **characterised in that** each side part (3, 4) is designed as a frame with an upper bar (7) running approximately parallel to the runner (5), which bar (7) carries the seat part (8).

5. Folding sledge according to Claim 4, **characterised by** at least one, in particular vertical, connecting piece (9) between the upper bar (7) and the runner (5), wherein the cross-piece(s) (1) are hinged to the connecting pieces.

6. Folding sledge according to Claim 5, **characterised by** two connecting pieces (9).

7. Folding sledge according to any one of the preceding claims, **characterised in that** the seat part (8) can be fixed to the side parts (3, 4) under tensile pre-stress.

8. Folding sledge according to Claim 7, **characterised in that** the tensile pre-stress takes place by means of an elastic design of the seat part (8) and/or by means of an elastic design of the connecting pieces (9) and/or by means of an elastic design of the stops (10, 11).

9. Folding sledge according to any one of Claims 4 to 8, **characterised in that** the runner (5) forms a further stop such that the swivel movement of the side parts (3, 4) is limited in the transport arrangement, wherein the side parts (3, 4) lie side by side in one plane in the transport arrangement.

10. Folding sledge according to any one of the preceding claims, **characterised in that** each cross-piece (1) is designed to be able to be folded up by a hinge joint (24) such that the side parts (3, 4) can be laid on top of each other.

11. Folding sledge according to Claim 10, **characterised in that** each cross-piece (1) has at least two U-shaped carrier halves (12, 13) and at least one central hinge point (24) connecting the adjacent free limbs of the carrier halves (12, 13), wherein the carrier halves (12, 13) are substantially aligned in the in-use arrangement and are arranged substantially parallel to each other in the transport arrangement.

12. Folding sledge according to Claim 10 or 11, **characterised in that** the hinge joint (24) can be arrested.

13. Folding sledge according to Claim 12, **characterised in that** means are provided for frictional locking of the hinge joint (24) by pre-tensioning in the axial direction.

14. Folding sledge according to Claim 12, **characterised in that** means are provided for arresting the hinge joint (24) by positive locking.

15. Folding sledge according to Claim 12, **characterised in that** means are provided for locking by offsetting the hinge joint, wherein undesired rotation of the carrier halves (12, 13) is positively prevented by contact with the adjacent surfaces (15, 16) of the carrier halves (12, 13).

16. Folding sledge according to any one of the preceding claims, **characterised in that** the side parts (3, 4) are divided into an upper part (17) and a lower part (18), which are connected to each other by means of at least one hinge connection.

17. Folding sledge according to Claim 16, **characterised in that** the upper part (17) and the lower part (18) are pivotably connected to each other by means of the hinge axis (2) such that the upper part (17) and the lower part (18) can be swivelled relative to each other about a hinge axis parallel to the direction of travel, wherein the hinge axis of the hinge connection also serves as rotation axis for the swivel connection of cross-piece (1) and side part (3, 4).

18. Folding sledge according to Claim 16 or 17 when dependent on Claim 5, **characterised in that** a hinge connection for the upper part (17) and the lower part (18) is present on each connecting piece (9), wherein each connecting piece (9) is divided into a part (9a) associated with the upper part (17) and a part (9b) associated with the lower part (18).

19. Folding sledge according to any one of Claims 16 to 18, **characterised in that** rotation of the upper part (17) and the lower part (18) in the in-use arrangement is limited by a further stop (19).

20. Folding sledge according to any one of the preceding claims, **characterised in that** the seat part (8) consists of a thin, elastic material.

21. Folding sledge according to any one of the preceding claims, **characterised in that** the side parts (3, 4) can be unfolded up to an angle of approximately 10° from the perpendicular in the in-use arrangement.

## Revendications

1. Luge repliable, qui peut être amenée dans une configuration d'utilisation et une configuration de transport, comprenant deux parties latérales (3, 4) repliables et présentant chacune au moins un patin, qui sont reliées par au moins une partie transversale (1) reliée aux parties latérales (3, 4) par des moyens d'articulation et peuvent basculer au moins partiellement autour d'un axe sensiblement parallèle au sens de marche de la luge de telle sorte qu'un déplacement des patins sensiblement parallèle au sens de marche de la luge est garanti dans la configuration d'utilisation, et une partie siège (8) présentant une assise, qui est reliée aux deux parties latérales (3, 4),
**caractérisée par**
- au moins une butée (10, 11) pour chaque partie latérale (3, 4) qui arrête un mouvement de pivotement de la partie latérale (3, 4) correspondant dans la configuration d'utilisation, et
- une liaison amovible entre au moins l'une des parties latérales (3, 4) et la partie siège (8), le patin étant stabilisé dans sa configuration d'utilisation par la liaison de la partie siège (8) avec les deux parties latérales (3, 4) et pouvant être rabattu, après détachement de la partie siège (8), de la configuration d'utilisation dans la configuration de transport.

2. Luge repliable selon la revendication 1, **caractérisée par** deux parties transversales (1) agencées parallèlement entre elles, qui sont espacées en particulier à peu près de l'intervalle d'une longueur de siège dans le sens de marche de la luge.

3. Luge repliable selon la revendication 1 ou 2, **caractérisée en ce que** les parties latérales sont articulées sur les extrémités de la ou des parties transversales (1).

4. Luge repliable selon l'une quelconque des revendications 1 à 3, **caractérisée en ce que** chaque partie latérale (3, 4) est conçue comme cadre avec un montant (7) supérieur, agencé à peu près parallèlement au patin (5), qui porte la partie siège (8).

5. Luge repliable selon la revendication 4, **caractérisée par** au moins une pièce de liaison (9) en particulier vertical entre le montant (7) supérieur et le patin (5), la ou les parties transversales (1) étant articulé(e)s sur les pièces de liaison (9).

6. Luge repliable selon la revendication 5, **caractérisée par** deux pièces de liaison (9).

7. Luge repliable selon l'une quelconque des revendications précédentes, **caractérisée en ce que** la partie siège (8) peut être fixée sous une précontrainte de traction sur les parties latérales (3, 4).

8. Luge repliable selon la revendication 7, **caractérisée en ce que** la précontrainte de traction s'effectue au moyen d'une réalisation élastique de la partie siège (8) et/ou au moyen d'une réalisation élastique des pièces de liaison (9) et/ou au moyen d'une réalisation élastique des butées (10, 11).

9. Luge repliable selon l'une quelconque des revendications 4 à 8, **caractérisée en ce que** le patin (5) forme une autre butée, de sorte qu'on a une limitation du mouvement de basculement des parties latérales (3, 4) dans la configuration de transport, les parties latérales (3, 4) étant disposées côte à côte dans un plan dans la configuration de transport.

10. Luge repliable selon l'une quelconque des revendications précédentes, **caractérisée en ce que** chaque partie transversale (1) est conçue de façon à pouvoir être rabattue par une articulation à charnière (24) de telle sorte que les parties latérales (3, 4) peuvent être posées les unes sur les autres.

11. Luge repliable selon la revendication 10, **caractérisée en ce que** chaque partie transversale (1) présente au moins deux moitiés de support (12, 13) en U et au moins une articulation à charnière (24) centrale, reliant les branches libres contiguës des moitiés de support (12, 13), les moitiés de support (12, 13) étant sensiblement alignées dans la configuration d'utilisation et étant disposées sensiblement parallèlement entre elles dans la configuration de transport.

12. Luge repliable selon la revendication 10 ou 11, **caractérisée en ce que** l'articulation à charnière (24) peut être verrouillée.

13. Luge repliable selon la revendication 12, **caractérisée en ce que** des moyens sont prévus pour un blocage par friction de l'articulation à charnière (24) par une précontrainte dans le sens axial.

14. Luge repliable selon la revendication 12, **caractérisée en ce que** des moyens sont prévus pour le verrouillage de l'articulation à charnière (24) par un blocage par complémentarité de forme.

15. Luge repliable selon la revendication 12, **caractérisée en ce que** des moyens sont prévus pour le verrouillage par un déplacement de l'articulation à charnière, une rotation non souhaitée des moitiés de support (12, 13) étant empêchée par complémentarité de forme par un contact des surfaces (15, 16) adjacentes entre elles des moitiés de support (12, 13).

16. Luge repliable selon l'une quelconque des revendications précédentes, **caractérisée en ce que** les parties latérales (3, 4) sont subdivisées en une partie supérieure (17) et une partie inférieure (18) qui sont reliées l'une à l'autre par au moins une liaison articulée.

17. Luge repliable selon la revendication 16, **caractérisée en ce que** la partie supérieure (17) et la partie inférieure (18) sont reliées l'une à l'autre par l'axe d'articulation (2) de façon basculante de telle sorte que la partie supérieure (17) et la partie inférieure (18) peuvent basculer l'une par rapport à l'autre autour d'un axe d'articulation parallèlement au sens de marche, l'axe articulé de la liaison articulée servant en même temps d'axe de rotation pour la liaison basculante de la partie transversale (1) et de la partie latérale (3, 4).

18. Luge repliable selon la revendication 16 ou 17 si dépendante de la revendication 5, **caractérisée en ce qu'**une liaison articulée pour la partie supérieure (17) et la partie inférieure (18) est présente sur chaque pièce de liaison (9), chaque pièce de liaison (9) étant subdivisée en une partie (9a) associée à la partie supérieure (17) et une partie (9b) associée à la partie inférieure (18).

19. Luge repliable selon l'une quelconque des revendications 16 à 18, **caractérisée en ce que** la partie supérieure (17) et la partie inférieure (18) sont limitées en rotation dans la configuration d'utilisation par une autre butée (19).

20. Luge repliable selon l'une quelconque des revendications précédentes, **caractérisée en ce que** la partie siège (8) est à base d'un matériau mince et élastique.

21. Luge repliable selon l'une quelconque des revendications précédentes, **caractérisée en ce que** les parties latérales (3, 4) peuvent être escamotées jusqu'à un angle d'environ 10° à partir de la verticale dans la configuration d'utilisation.
